Europäisches Patentamt

European Patent Office

Office européen des brevets

(19)

(11) Numéro de publication : **0 681 270 A1**

# (12) DEMANDE DE BREVET EUROPEEN

(21) Numéro de dépôt : **95400957.7**

(22) Date de dépôt : **27.04.95**

(51) Int. Cl.$^6$ : **G06T 7/20**

(30) Priorité : **02.05.94 FR 9405325**

(43) Date de publication de la demande :
**08.11.95 Bulletin 95/45**

(84) Etats contractants désignés :
**DE DK GB IT**

(71) Demandeur : **COMMISSARIAT A L'ENERGIE ATOMIQUE**
**31-33, rue de la Fédération**
**F-75015 Paris (FR)**

(72) Inventeur : **Derou, Dominique**
**Route de Coutances,**
**l'Ancelière**
**F-50290 Breville sur Mer (FR)**
Inventeur : **Herault, Laurent**
**69, Les Hauts de Furonnières**
**F-38640 Claix (FR)**

(74) Mandataire : **Dubois-Chabert, Guy et al**
**c/o BREVATOME**
**25, rue de Ponthieu**
**F-75008 Paris (FR)**

(54) **Procédé de trajectographie d'objets et dispositif de mise en oeuvre de ce procédé.**

(57)     L'invention concerne un procédé d'obtention de trajectoires d'objets en mouvement, en optimisant au moins un critère issu de la physique du phénomène observé, comprenant les étapes suivantes :
     — une étape d'enregistrement de signaux (10) ;
     — une étape (11) d'extraction de parties déterminées de signaux ;
     — une étape (12) de répartition de l'ensemble des parties de signaux précédemment extraits en classes, chaque classe représentant une trajectoire potentielle ;
     — une étape (13, 14) de sélection d'un sous-ensemble de classes qui satisfait des contraintes liées au type de réseau observé ;
     — une étape (15) de sélection parmi les classes représentant les trajectoires potentielles de celles satisfaisant les contraintes, de façon à obtenir les trajectoires "réelles" des objets.
     L'invention concerne également un dispositif de mise en oeuvre de ce procédé.

FIG.1

EP 0 681 270 A1

## Domaine technique

La présente invention concerne un procédé de trajectographie d'objets et un dispositif de mise en oeuvre de ce procédé.

## Etat de la technique antérieure

La trajectographie d'objets concerne l'étude des trajectoires temporelles et spatiales d'objets en mouvement, par exemple des particules en mouvement. Elle permet d'induire des propriétés physiques diverses sur les objets ou les phénomènes auxquels ils sont reliés (vitesse, accélération, moment magnétique, etc.). La trajectographie d'objets consiste dans un premier temps à enregistrer la position de ceux-ci à plusieurs instants distincts et consécutifs, séparés par des intervalles de temps fixés: chaque enregistrement est appelé un fragment. Dans un deuxième temps, on analyse l'ensemble des fragments en le segmentant en classes (une classe regroupe plusieurs fragments) pour reconstituer les trajectoires des objets.

## Reconnaissance de formes à partir de fragments

Des méthodes ayant pour objet la reconnaissance de formes à partir de fragments sont décrites dans différents articles de l'art connu, et notamment dans ceux cités ci-après.

Un article de A. Sha'ashua et S. Ullmann, intitulé "Structural saliency : the detection of globally salient structures using a locally connected network" (proceedings of the Second International Conference on Computer Vision, pages 321-327, 1988), décrit une mesure de saillance basée sur la courbure et la variation de courbure des fragments (qui sont des segments), la saillance étant la propriété que certaines formes ont d'attirer l'attention visuelle, sans nécessiter un balayage visuel complet de l'image à laquelle elles appartiennent. Le problème est formalisé sous forme d'un problème d'optimisation, dans lequel il s'agit de maximiser la mesure de saillance globale de l'image et est résolu par une méthode de relaxation et non une méthode neuromimétique.

Un article de P. Parent et S.W. Zucker, intitulé "Trace inference, curvature consistency and curve detection" (IEEE Transactions on Pattem Analysis and Machine Intelligence, vol. 11, no. 8, pages 823-839, 1989) permet de reconnaître une courbe à partir d'une carte des pixels, une carte des gradients (tangentes) et une carte des courbures de l'image originale. Ils formulent le problème de la reconnaissance de courbes en termes de problème d'optimisation globale. Ils définissent des coefficients entre fragments de base et utilisent une fonction de contrainte basée sur la cocircularité des tangentes voisines et sur une relation de consistance entre courbures. Une mesure appelée support de cocircularité calcule ensuite la saillance de chaque élément, qui est utilisée dans une fonctionnelle à minimiser. La méthode va tendre à sélectionner les fragments constituant des courbes lisses. La méthode de résolution utilisée est la méthode itérative de relaxation.

## Trajectographie d'objets

Un article de C. Peterson, intitulé "Track finding with neural networks" (Nuclear Instruments and Methods in Physics Research, vol. A279, pages 537-545, 1989), présente un algorithme neuromimétique pour trouver les trajectoires de particules dans des expériences de physique des particules. L'algorithme est basé sur un réseau de neurones du type de celui de Hopfield et sur des équations de mises à jour des neurones issues de la théorie du champ moyen. Le problème de suivi de particules est formalisé comme la recherche de trajectoires (objets) composées du plus grand nombre de points (fragments) formant des courbes lisses et droites. Un neurone du réseau étant associé à chaque couple de fragments, le problème revient à rechercher des courbes formées de couples de fragments contigus, de même sens et le plus alignés possible. Une énergie E, fonction pondérée des termes associés à ces critères codant la qualité de la solution, permet d'obtenir les équations d'évolution des coefficients synaptiques du réseau neuronal. A la convergence du réseau, l'énergie E est optimisée. On peut noter les défauts suivants :

- une grande sensibilité aux paramètres. Le résultat final est très dépendant des paramètres pondérant les différents termes de l'équation de l'énergie ;
- non satisfaction des contraintes. Le réseau optimisant une fonction, qui code globalement le problème, on ne peut pas assurer que toutes les contraintes seront rigoureusement satisfaites. En d'autres termes, la solution peut contenir des éléments ne satisfaisant pas les contraintes. La solution finale peut donc être de mauvaise qualité ;
- temps de calcul prohibitif. L'algorithme de calcul ne réalise aucun prétraitement. Si l'image contient n attributs, le réseau sera composé de $n^2$ neurones, soit $n^4$ poids synaptiques à déterminer. Les temps de calcul requis sont donc très importants. C'est d'ailleurs la raison pour laquelle cet algorithme n'a été implanté que sur des problèmes de très petite dimension.

Un article de A. Cenedese, G. Romano, A. Paglialunga et M. Terlizzi, intitulé "Neural net for trajectories recognition in a flow" (proceedings of the Sixth International Symposium on Applications of Laser Techniques to Fluid Mechanics, pages 27.1.1-27.1.5, 1992) présente une méthode neuromimétique de reconnaissance de trajectoires en mécanique des fluides. Le réseau utilisé est un réseau multicouches basé sur un modèle fourni par le classifieur de Carpenter-Grossberg. Dans ce type de réseau, le calcul des poids synaptiques s'effectue sans superviseur. L'algorithme fonctionne avec une séquence d'images. L'apprentissage, et donc le calcul des poids synaptiques, est réalisé grâce à un certain nombre d'images de la séquence. Ensuite le champ de vitesse pourra être déterminé. Le réseau neuromimétique décrit dans cet article est un réseau à apprentissage. L'inconvénient majeur de cette méthode est donc que, pendant le temps d'enregistrement de la séquence, le régime du fluide en mouvement analysé doit être stationnaire. D'autre part, la méthode nécessite un temps de calcul très important et utilise de nombreux paramètres dont l'estimation est ad hoc. Enfin, en l'état actuel, l'algorithme proposé nécessite une importante validation.

Un article de M. Gyulassy et de M. Harlander, intitulé "Elastic tracking and neural network algorithms for complex pattern recognition" (Computer Physics Communications, vol. 66, pages 31-46, 1991), propose un algorithme de suivi élastique pour déterminer des trajectoires d'expériences de physique des particules. Dans l'approche de suivi élastique, une trajectoire est un objet hélicoïdal, qui se trouve dans une forme s'ajustant le mieux aux données, i.e. aux fragments. L'hélice peut être vue comme étant chargée électriquement et étant attirée par les fragments qui ont une charge de signe opposé. La notion de suivi élastique intervient dans le calcul des poids synaptiques. Le réseau de neurones utilisé est le même réseau que celui utilisé par C. Peterson dans l'article précédemment cité. Seul le calcul des poids synaptiques est modifié, chaque poids synaptique tenant alors compte de la qualité de la trajectoire ajustable sur les neurones reliés par ce poids synaptique. Cette méthode présente les mêmes inconvénients que la méthode de C. Peterson :
- sensibilité aux paramètres,
- non satisfaction des contraintes,
- temps de calcul prohibitif.

## Réseaux neuromimétiques

Ces réseaux ont largement été étudiés depuis plusieurs années et des applications diverses ont été développées, notamment pour la résolution de problèmes d'optimisation, et de reconnaissance de formes.

Les réseaux neuromimétiques utilisent une information numérique et sont des systèmes qui effectuent des calculs inspirés du comportement des neurones physiologiques. Un modèle neuromimétique est caractérisé par trois constituants de base : un réseau de neurones formels, une règle d'activation et une dynamique d'évolution.

Le réseau est composé d'un ensemble de neurones formels. Un neurone formel est une unité de calcul constituée d'une entrée, appelée potentiel (noté $u$) et d'une sortie, correspondant à un niveau d'activation numérique (noté $p$). A chaque instant, le niveau d'activation de chaque neurone est communiqué aux autres neurones. Les neurones sont en effet connectés ensemble par des connexions pondérées, appelées poids synaptiques. Le poids de la connexion entre la sortie du neurone $i$ et l'entrée du neurone $j$ est noté $w_{ij}$. La quantité totale d'activation en entrée $u_j$ que le neurone $j$ reçoit des autres neurones à chaque instant est utilisée par ce neurone pour mettre à jour sa sortie. On l'appelle parfois potentiel (ou potentiel d'activation) du neurone $j$.

La règle d'activation d'un réseau neuromimétique est une procédure locale que chaque neurone suit en mettant à jour son niveau d'activation en fonction du contexte d'activation des autres neurones. La sortie d'un neurone est ainsi donnée par une fonction de transfert non-linéaire appliquée au potentiel. Cette fonction non-linéaire peut être une fonction à seuil, appelée aussi fonction de Mac-Cullogh et Pitts, et définie, pour le neurone $i$ considéré à la date $t$, par :

$$\begin{cases} p_i(t) = 1 & si \ u_i(t) > 0 \\ p_i(t) = 0 & si \ u_i(t) < 0 \\ p_i(t) = p_i(t-1) & si \ u_i = 0 \end{cases} \qquad (1)$$

La dynamique d'évolution est la règle permettant la mise à jour des neurones. Au départ ($t = 0$), les sorties des neurones sont tirées aléatoirement ( 0 ou 1). Puis le réseau évolue en mettant à jour ses neurones. Pour mettre à jour un neurone $i$ à l'instant $t$, on calcule son potentiel à cette date ;

**EP 0 681 270 A1**

$$u_i(t) = u_i(t-1) + \Delta u_i(t) \quad (2)$$

La variation de potentiel $\Delta u_i(t)$ va correspondre à la dynamique d'évolution. Différents modèles existent dans l'art connu pour définir cette dynamique. Suivant le signe de $\Delta u_i(t)$ entre deux mises à jour du neurone $i$, on dit que le neurone est inhibé (variation de potentiel négative qui tend à mettre la sortie à 0) ou excité (variation de potentiel positive qui tend à mettre la sortie à 1). Si son potentiel est strictement positif, le neurone met sa sortie à 1 : il est activé. Si son potentiel est strictement négatif, il met sa sortie à 0 : il est désactivé. Si son potentiel est nul, la valeur de la sortie reste inchangée. Ainsi, la sortie du neurone $i$ peut être amenée à changer entre deux mises à jour. On dit que le réseau a convergé si, pour chaque neurone, aucune mise à jour ne modifie le potentiel du neurone.

Le mode de convergence est défini par l'ordre dans lequel sont mis à jour les neurones. Son choix est de grande importance pour la qualité de la convergence. Le mode de convergence peut être :
- asynchrone : un neurone est mis à jour à la fois. La nouvelle sortie calculée lors de sa mise à jour sert à la mise à jour des autres neurones. Les neurones peuvent être mis à jour séquentiellement dans un ordre fixé (on parle de mode asynchrone séquentiel) ou aléatoirement (on parle de mode asynchrone aléatoire) ;
- synchrone : tous les neurones sont mis à jour simultanément ;
- synchrone par bloc : on met à jour de façon synchrone des blocs de neurones.

On va à présent présenter quelques dynamiques d'évolution conçues pour résoudre des problèmes d'optimisation.

Le modèle ayant servi de base aux principaux algorithmes neuronaux d'optimisation est le modèle présenté par J. Hopfield et D. Tank dans l'article intitulé "Neural computation of decizions in optimization problems" (Biological Cybernetics, vol. 52, pages : 141-152, 1985). Ils définissent une fonction énergie E :

$$E = -\frac{1}{2}\sum_{i=1}^{n}\sum_{j=1}^{n} w_{ij} \cdot p_{ij} \cdot p_j - \sum_{i=1}^{n} I_i \cdot p_i \qquad (3)$$

Les sorties neuronales $p_i$ sont analogiques, comprises entre 0 et 1, et $I_i$ représente un biais d'entrée. Cette énergie peut être vue comme l'énergie physique d'un système de verres de spins. L'énergie E codant le problème, le problème revient à minimiser cette énergie à la convergence du réseau. J. Hopfield, dans un article intitulé "Neural networks and physical systems with emergent collective computational abilities" (proceedings of the National Academy of Sciences, vol. 79, pages 2554-2558, 1982) démontre (théorème de Hopfield) que :
- si la dynamique d'évolution du réseau est :

$$\Delta u_i(t) = -\frac{\Delta E}{\Delta p_i}(t)$$

- si la règle d'activation utilisée est celle de Mc Culloch-Pitts,
- et si la matrice des poids synaptiques est symétrique ($w_{ij} = w_{ji}$),
- alors, pour tout neurone $i$, et à toute date $t$ :

$$\frac{\Delta E}{\Delta t}(t) \leq 0$$

Ainsi l'énergie va décroître, au cours de l'évolution du système, jusqu'à atteindre un minimum.

Plus généralement, les auteurs précédemment cités, proposent, pour résoudre les problèmes d'optimisation, d'exprimer l'énergie comme une somme pondérée d'une fonction coût et d'une fonction contraintes (formulation appelée aussi lagrangien du problème) :

$$E = E_{coût} + \lambda.E_{contraintes}$$

L'énergie de contraintes est d'autant plus élevée que les contraintes liées au problème ne seront pas satisfaites. De même, l'énergie de coût quantifie la qualité de la solution. Cette méthode a le défaut de ne pas garantir la satisfaction parfaite des contraintes. Elle propose une solution qui est un compromis entre la minimisation du coût et la satisfaction des contraintes.

La plupart des méthodes de détermination de trajectoires connues génèrent des trajectoires à partir de connaissances a priori basées sur la nature des enregistrements des trajectoires (nombre de points, forme de la trajectoire recherchée) et certaines trajectoires trouvées sont erronées.

Aucune des méthodes neuromimétiques présentées dans l'état de l'art ne parvient à traiter des problèmes de taille réelle.

Aucune de ces méthodes ne garantit la satisfaction de toutes les contraintes du problème.

L'objet de l'invention est de proposer un procédé de trajectographie d'objets permettant de déterminer les trajectoires locales d'objets pouvant être de natures similaires entre elles à partir d'enregistrements de posi-

4

tions spatiales des objets à des dates connues qui :
- garantisse la satisfaction de toutes les contraintes du problème ;
- soit applicable à tout signal réel de taille quelconque ;
- et qui puisse avantageusement utiliser un réseau neuromimétique original.

Exposé de l'invention

L'invention concerne un procédé d'obtention de trajectoires d'objets en mouvement, en optimisant au moins un critère de la physique du phénomène observé, caractérisé en ce qu'il comprend les étapes suivantes :
- une étape d'enregistrement de signaux composés de fragments caractéristiques des positions des objets à différents instants, de parties qui présentent la même nature que les fragments mais qui sont du bruit, et de parties attribuables au bruit sans confusion possible ;
- une étape d'extraction de parties de signaux ayant la même nature que les fragments et détermination de caractéristiques leur étant associées, à partir des connaissances a priori sur leur nature et sur les trajectoires recherchées ;
- une étape de répartition de l'ensemble des parties de signaux précédemment extraits en classes, chaque classe représentant une trajectoire potentielle et comprenant un nombre prédéterminé de fragments ;
- une étape de sélection d'un sous-ensemble de classes qui satisfait des contraintes liées au type de phénomène observé comportant :
  • la génération d'un ensemble de n-uplets constitués d'un sous-ensemble de n classes,
  • la mesure de la compatibilité des classes assemblées en n-uplets par une première fonction analytique déterminée à partir des contraintes liées au type de phénomène observé et au dispositif d'acquisition,
  • la mesure de la qualité des n-uplets par une seconde fonction analytique, déterminée à partir des contraintes liées au phénomène observé et au dispositif d'acquisition ;
- une étape de sélection parmi les classes représentant les trajectoires potentielles de celles satisfaisant les contraintes, par un procédé d'optimisation sous contraintes d'au moins du (ou des) critère(s) précédents en utilisant les mesures précédentes de compatibilité et de qualité, de façon à obtenir les trajectoires "réelles" des objets.

L'invention propose ainsi un procédé plus robuste car il prend en compte la nature du phénomène étudié comme les incompatibilités entre les différentes trajectoires ou le mouvement global des objets.

Dans cette définition de l'invention, on entend par exemple par "nature" d'un fragment la forme de la partie de signal correspondante. Cette nature est connue a priori. Par exemple dans un problème à une dimension, la nature du fragment peut être assimilée à un pic. Dans un problème à deux dimensions, la nature peut être une tâche. La connaissance a priori porte aussi sur le nombre de fragments constitutifs d'une trajectoire et par conséquent d'une classe.

En ce qui concerne les "n-uplets", le n est déterminé en fonction du temps de calcul disponible, du nombre d'objets, de la nature des trajectoires, de la vitesse... Par exemple, les classes sont groupées par paires (n=2).

Avantageusement dans la première étape, la position des objets est enregistrée à plusieurs instants distincts et consécutifs, séparés par des intervalles de temps fixés.

Avantageusement la dernière étape de sélection de sous-ensembles de formes mutuellement compatibles est réalisée en utilisant un réseau de neurones.

Avantageusement pendant l'étape d'enregistrement, lorsqu'il est possible de travailler en temps réel, le traitement de conditionnement des signaux obtenus comporte une sous-étape de mémorisation des signaux. Ces signaux peuvent être prétraités avant leur mémorisation.

Avantageusement le procédé de l'invention peut être utilisé pour l'extraction de formes déterminées dans un environnement bruité.

L'invention concerne également un dispositif de mise en oeuvre de ce procédé caractérisé en ce qu'il comprend :
- un dispositif d'enregistrement ;
- un module d'extraction de caractéristiques ;
- un module de génération de trajectoires potentielles ;
- un module de mise en forme du problème ;
- un module de résolution du problème d'optimisation.

Avantageusement le dispositif d'enregistrement comprend :
- un étage d'échantillonnage de signaux ;
- un étage d'acquisition ;

- un étage d'enregistrement.

Avantageusement, le dispositif comprend un réseau de neurones.

Dans un premier mode de réalisation, le réseau de neurones comprend :

- une première mémoire table des sorties pi des neurones recevant la sortie d'un circuit de tirage d'un entier allant de 1 à $N$ ;
- une seconde mémoire des relations entre objets ;
- une troisième mémoire table des potentiels des neurones ;
- une quatrième mémoire table des dernières variations des potentiels des neurones
- un premier circuit de calcul permettant de calculer $A.p_i.T(\{p_j\})$ ;
- un second circuit de calcul permettant de calculer $B.(1-p_i).S(\{p_j\})$ ;
- un troisième circuit de calcul permettant de calculer $C.R(\{p_j\})$ ;

ces trois circuits de calculs étant reliés aux sorties des deux premières mémoires ;

- un dispositif d'interruption relié à la sortie du troisième circuit de calcul et aux sorties de la quatrième mémoire ;
- un premier additionneur recevant les sorties des deux premiers circuits de calcul et du dispositif d'interruption ;
- un second additionneur recevant les sorties de la troisième mémoire et du premier additionneur ;
- un circuit de fonction de seuillage à sortie binaire recevant la sortie du second additionneur.

Dans un second mode de réalisation, le réseau de neurones comprend :

- une première mémoire table des valeurs des sorties $p_i$ des neurones ;
- une seconde mémoire liste des voisins de chaque neurone ;
- une troisième mémoire relation entre les objets ;
- une quatrième mémoire des potentiels des neurones ;
- une cinquième mémoire contenant la valeur courante de la fonction qualité E ;
- un premier circuit de calcul permettant de calculer la variation de potentiel à appliquer au neurone $i$ ;
- un second circuit de calcul permettant de calculer la variation de potentiel à appliquer aux neurones voisins du neurone $i$ ;
- un premier additionneur recevant les sorties du premier circuit de calcul et de la quatrième mémoire ;
- au moins un second additionneur recevant les sorties du second circuit de calcul et de la quatrième mémoire ;
- au moins deux circuits fonctions de seuillage binaire $F$ reliés respectivement aux sorties de ces deux additionneurs.

Par la formalisation du problème sous forme d'un problème d'optimisation globale sous contraintes et par l'utilisation des réseaux neuromimétiques décrits, on peut garantir une bonne qualité de la solution retenue, qualité jusqu'à présent non atteinte par les autres méthodes de l'art connu.

Par rapport à l'art connu, l'invention présentée réunit les avantages suivants :

- la qualité des résultats est très peu dépendante des paramètres (coefficients de pondération des contraintes $\lambda_k$, paramètres inhérents à chaque fonction de contraintes strictes $f_k(i,j)$ ou à chaque critère $g_k(i,j)$). Ces coefficients n'ont pas besoin d'être ajustés finement ;
- le procédé de l'invention utilise les propriétés et caractéristiques du phénomène étudié. La solution est donc dirigée de manière juste ;
- les contraintes strictes inhérentes au phénomène étudié sont absolument satisfaites. A la convergence du réseau, la satisfaction de toutes les contraintes est garantie ;
- les calculs numériques internes au module de planification nécessitent uniquement des opérations logiques et arithmétiques simples (+, -, ∗, /, comparaisons), dues au fait que les neurones utilisés sont binaires. Ceci rend possible la réalisation de matériel ("hardware") spécifique ;
- la vitesse de convergence est très rapide.

Brève description des dessins

- La figure 1 illustre les différentes étapes du procédé de l'invention ;
- les figures 2, 3 et 4 illustrent le dispositif de mise en oeuvre du procédé de l'invention ;
- les figures 5 et 6 illustrent un neurone et un premier réseau de neurones associés au dispositif de mise en oeuvre du procédé de l'invention ;
- la figure 7 illustre un second réseau de neurones associé au dispositif de mise en oeuvre du procédé de l'invention ;

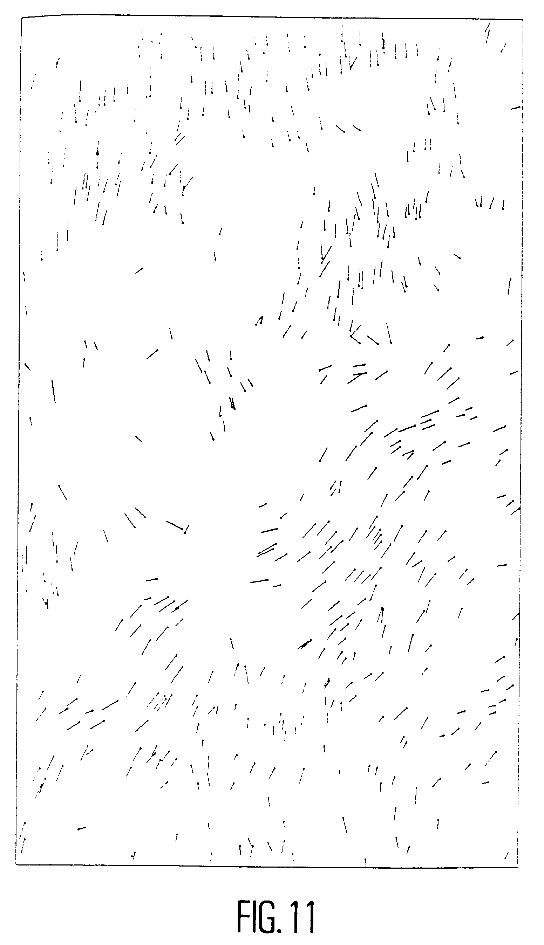

- les figures 8, 9, 10 et 11 illustrent un exemple de résultats des différents traitements réalisés dans le procédé de l'invention.

Exposé détaillé de modes de réalisation

Le lexique situé en fin de description fait partie de la description.

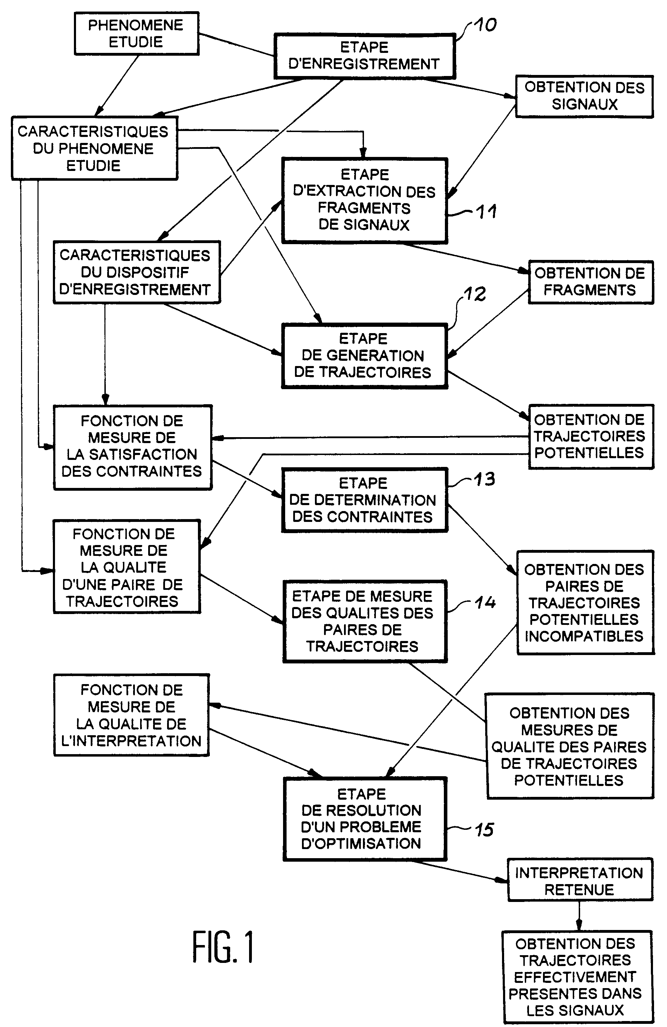

Le procédé de l'invention comprend cinq étapes, illustrées sur la figure 1 :

- dans une première étape 10, des signaux sont enregistrés. Ces signaux sont appelés des fragments. Ils représentent l'enregistrement des trajectoires des objets, chaque trajectoire étant constituée d'une succession temporelle de fragments ;

- une seconde étape 11 du procédé consiste à extraire les caractéristiques (positions, formes, etc.) des divers fragments. La connaissance du phénomène étudié et du dispositif d'enregistrement donnent des connaissances a priori sur la nature des fragments et sur les trajectoires recherchées ;

- dans une troisième étape 12 les connaissances a priori sur les fragments permettent de segmenter l'ensemble des fragments en classes, chacune d'elles étant caractéristique de la trajectoire potentielle d'un objet. Une classe particulière correspond aux fragments que le procédé n'a pas associés à des objets. Tous les fragments de cette classe sont considérés comme du bruit, au sens du traitement du signal. A ce stade du procédé, les classes ne sont pas nécessairement deux à deux disjointes. Un certain nombre de trajectoires (ou classes) sont erronées. La suite du procédé a pour but de les déterminer et de les éliminer. Le nombre de trajectoires potentielles, satisfaisant les contraintes liées à l'enregistrement, croît exponentiellement avec le nombre d'objets et avec le nombre de fragments enregistrés pour chaque objet ;

- afin d'éliminer les classes, issues de la troisième étape, qui ne correspondent pas à de véritables trajectoires d'objets, une quatrième étape 13, 14 a pour but de définir un problème d'optimisation dont la solution correspond à des trajectoires réelles d'objets. La connaissance du phénomène étudié et du dispositif d'enregistrement permet de définir une fonction à maximiser et des contraintes que la solution doit satisfaire. La fonction mesure une qualité globale des trajectoires retenues par le procédé. Elle est calculée à partir de mesures de qualité de chaque paire de classes possible. L'identification de trajectoires d'objets par groupement de fragments peut alors être vue comme la recherche, parmi l'ensemble des trajectoires potentielles, du sous-ensemble de trajectoires potentielles satisfaisant un ensemble de contraintes et dont l'interprétation maximise une fonction de qualité. Ce problème est un problème d'optimisation globale sous contraintes ;

- l'utilisation par exemple d'un réseau neuromimétique constitue la cinquième étape du procédé. Il permet de résoudre ce problème rapidement, en garantissant la satisfaction de toutes les contraintes et en optimisant la qualité de la solution.

Le résultat final trouvé fournit l'identification des trajectoires effectivement présentes dans les signaux initiaux.

Ainsi le procédé de l'invention utilise le contexte suivant :

- le phénomène étudié ;
- les caractéristiques du phénomène étudié ;
- les caractéristiques du dispositif d'enregistrement ;
- une fonction de mesure de la satisfaction des contraintes par paire de trajectoires ;
- une fonction de mesure de la qualité du groupement de deux trajectoires ;
- une fonction de mesure de la qualité globale des trajectoires retenues.

Les phénomènes étudiés peuvent être par exemple :

- un écoulement de fluide, par vélocimétrie par imagerie particulaire Afin d'analyser le comportement d'un fluide, on ensemence celui-ci avec des particules qui vont suivre le fluide. On enregistre sur une image le déplacement des particules présentes dans un fluide. A partir des fragments de déplacement, on entend déterminer la trajectoire de chaque particule et déterminer les caractéristiques du phénomène étudié. Des applications existent en mécanique des fluides (vélocimétrie par imagerie particulaire), en physique des hautes énergies (suivi de particules) et en toute discipline utilisant du suivi d'objets ou repérage de trajectoires ;

- des collisions de particules en physique des particules. Par exemple, une matrice tridimensionnelle de fils est insérée dans la chambre d'expérience, ces fils électriques ayant la caractéristique de détecter tout passage de particule ionisée. Les signaux enregistrent des impulsions temporelles (i.e. diracs) de passage des particules à travers cette matrice de maillage. Il s'agit de reconstituer les trajectoires à partir de ces impulsions temporelles ;

- tout phénomène nécessitant un suivi de trajectoires d'objets.

Les caractéristiques du phénomène étudié correspondent aux lois physiques régissant les trajectoires attendues et aux caractéristiques existant entre trajectoires. Ce sont par exemple :

- les caractéristiques macroscopiques d'un fluide ;

EP 0 681 270 A1

- les caractéristiques d'un flux particulier ;
- la nature des objets ;
- la nature des trajectoires locales recherchées (rectilignes, circulaires, etc.) ;
- les incompatibilités ou compatibilités entre trajectoires. Cela découle d'hypothèses sur les phénomènes, suivant que l'on suppose que les objets peuvent ou non se diviser ;
- la présence de zones particulières (tourbillons, par exemple).

Les caractéristiques du dispositif d'enregistrement sont liées au type de dispositif d'enregistrement utilisé. Ces caractéristiques fournissent un ensemble de contraintes.

La fonction de mesure de la satisfaction des contraintes d'une paire de trajectoires permet, à partir des caractéristiques du dispositif d'enregistrement et du phénomène étudié, d'analyser et quantifier la façon dont chaque paire de trajectoires trouvée après l'étape 12 du procédé de l'invention satisfait les contraintes liées aux caractéristiques du dispositif d'enregistrement et du phénomène étudié.

La fonction de mesure de la qualité d'une paire de trajectoires utilise certaines caractéristiques du dispositif d'enregistrement et du phénomène étudié. Elle évalue, d'après ces caractéristiques, la qualité de chaque paire de trajectoires trouvée au terme de l'étape 12.

La qualité globale de l'interprétation est mesurée par une fonction des mesures de qualité, calculées pour chaque paire de trajectoires.

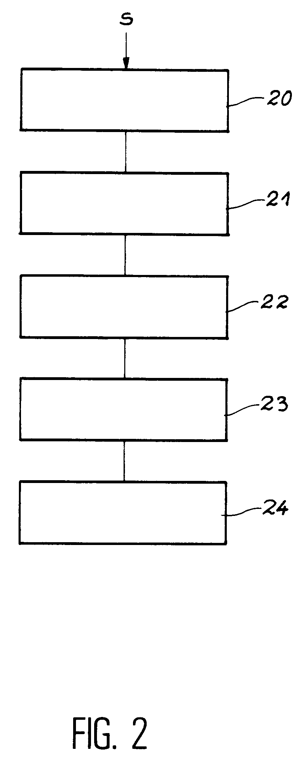

Le dispositif de mise en oeuvre de ce procédé, tel que représenté sur la figure 2, comprend :

- un dispositif d'enregistrement 20 ayant pour objet l'acquisition et l'enregistrement du phénomène étudié sous forme de signaux S ;
- un module d'extraction 21 des caractéristiques de fragments constituant les trajectoires des objets, à partir des signaux. Il fournit la liste des éléments fragmentaires présents dans les signaux et leurs caractéristiques ;
- un module 22 de génération de trajectoires potentielles à partir de la liste de fragments et des caractéristiques du dispositif d'enregistrement et du phénomène étudié ;
- un module 23 de mise en forme du problème comme un problème d'optimisation. Les contraintes sur la solution sont définies de la manière suivante : pour chaque trajectoire potentielle, on détermine avec quelles autres trajectoires potentielles elle est incompatible. La fonction à maximiser nécessite de calculer un coefficient de qualité avec chaque trajectoire potentielle compatible. Ce module va utiliser deux fonctions : une fonction mesurant la satisfaction des contraintes et une fonction mesurant la qualité des paires de trajectoires. Il génère la liste des paires de trajectoires mutuellement incompatibles et la liste des mesures de qualité des paires de trajectoires ;
- un module 24 de résolution d'un problème d'optimisation sous contraintes. Ce module a pour objet de trouver, parmi les trajectoires potentielles extraites par le module 22 de génération de trajectoires potentielles, un sous-ensemble de trajectoires potentielles qui sont deux à deux compatibles, lequel sous-ensemble maximise une fonction, appelée qualité globale de l'interprétation, des coefficients de qualité définis pour chaque paire de trajectoires. Deux cas sont à distinguer :
  - soit les qualités des paires de trajectoires compatibles sont binaires. Dans ce cas, le problème revient à chercher le plus grand ensemble de trajectoires potentielles mutuellement compatibles,
  - soit les qualités des paires de trajectoires compatibles sont des nombres réels entre 0 et 1.

Avantageusement, pour résoudre le problème d'optimisation, on utilise des réseaux neuromimétiques.

Suivant qu'on est dans un cas ou dans l'autre, le réseau neuromimétique qui résoud le problème est différent, en termes d'équations de mise à jour des potentiels des neurones, de dynamique et du dispositif associé.

On va à présent étudier chacune des étapes du procédé de l'invention :

**Etape d'enregistrement des signaux (10)**

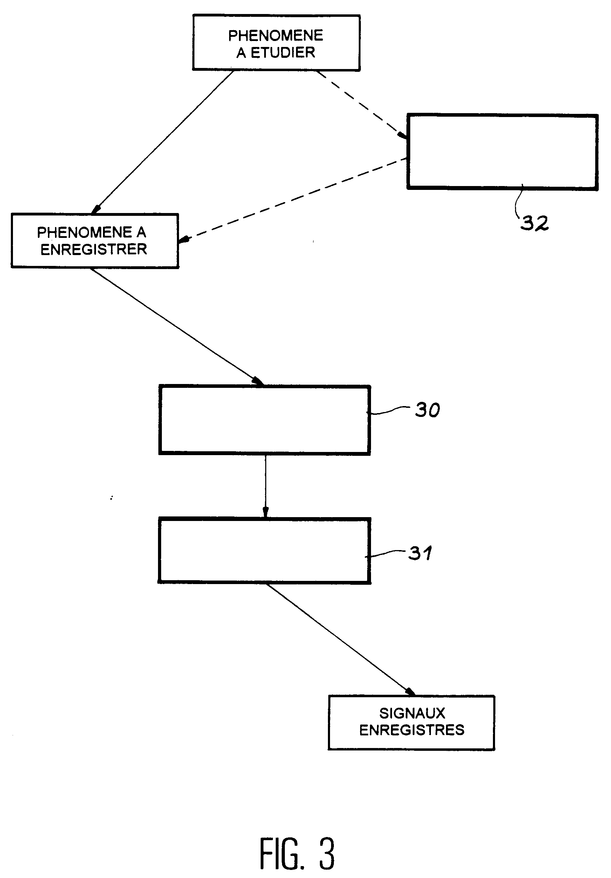

Le dispositif d'enregistrement 20 a pour objet l'acquisition et l'enregistrement du phénomène étudié, sous forme de signaux contenant des informations fragmentaires des trajectoires des objets présentes dans le phénomène étudié. Il est représenté sur la figure 3.

La nature des signaux enregistrés peut être de deux types :

- soit les enregistrements aux diverses dates sont tous enregistrés sur le même support (ce qui augmente la complexité du problème). Le support est par exemple une image, un signal électrique, une photographie ;
- soit les enregistrements aux diverses dates sont réalisés sur des supports distincts. Le support est par exemple une séquence d'images (une image par date d'enregistrement), une matrice de signaux électriques.

8

Ces signaux vont contenir des fragments des trajectoires à reconstituer. La nature de ces fragments peut être :

- des points ;
- des taches ;
- des segments de droite ;
- des portions de courbes paramétrées ;
- des impulsions temporelles (diracs) ;
- etc.

Le dispositif d'enregistrement 20 comporte un premier étage : l'étage d'acquisition des signaux 30. En fonction du type de signal enregistré, l'étage d'acquisition peut être : une CCD, une caméra vidéo, une caméra infrarouge, ou tout autre capteur d'imagerie, ou encore un dispositif électronique, etc... .

Il comporte un second étage : l'étage d'enregistrement des signaux 31 qui diffère selon le type de signal enregistré. Par exemple :

- dans le cas de signaux de type image : numérisation et mémorisation des signaux qui permet d'obtenir des signaux numériques ;
- dans le cas de signaux de type électrique : compression et mémorisation.

En ce qui concerne la cadence d'acquisition du système correspondant à l'étage d'acquisition, on choisit de préférence une cadence adaptée à l'ordre de grandeur du phénomène que l'on veut étudier : par exemple, pour identifier une trajectoire de déplacement perceptible à l'oeil, la cadence d'acquisition sera de l'ordre de 25 images par seconde. Pour détecter des mouvements lents, on diminue la cadence d'acquisition. Pour détecter des mouvements très rapides, on utilise des cadences d'acquisition supérieures.

D'autre part, un étage supplémentaire est parfois nécessaire en fonction du type d'application : l'étage d'échantillonnage du phénomène 32. Pour enregistrer des fragments de trajectoires d'objets, il peut être nécessaire d'échantillonner le phénomène à une fréquence connue. Par exemple, en vélocimétrie par imagerie particulaire, on enregistre une succession de fragments des trajectoires des particules présentes dans le fluide analysé. La fréquence d'échantillonnage peur varier au cours du temps: les délais entre deux enregistrements successifs peuvent différer. Par exemple, en vélocimétrie par imagerie particulaire, cela permet de déterminer le sens de la vitesse de chaque objet. Les fragments de trajectoires vont permettre d'induire des caractéristiques (position, vitesse, sens de la vitesse, etc.) des particules aux instants où chaque fragment est enregistré. L'étage d'échantillonnage du phénomène peut être :

- directement lié au système d'acquisition (la caméra échantillonne le mouvement en enregistrant une séquence d'images ; de même pour la matrice de fils électroniques des détecteurs électriques de physique des hautes énergies) ;
- un dispositif permettant d'illuminer le phénomène étudié de façon cadencée et d'enregistrer le mouvement des objets à la cadence d'illumination. Ainsi seront enregistrés les fragments des trajectoires aux instants d'illumination. Pratiquement, on peut par exemple utiliser des lasers pulsés, des caches, placés devant une source lumineuse de lumière blanche constante, permettant de stroboscoper la lumière, etc.

Le dispositif d'enregistrement fournit un ensemble de caractéristiques, que l'on appelle caractéristiques du dispositif d'enregistrement. Ces caractéristiques fournissent des indications sur :

- la nature des fragments enregistrés (par exemple : points, taches, ellipsoïdes, segments, arcs de courbes paramétrées, impulsions temporelles) ;
- le nombre de fragments enregistrés pour chaque trajectoire (par exemple : le nombre de fragments enregistrés pour chaque trajectoire de particules dans l'application de vélocimétrie par imagerie particulaire) ;
- la dimension des fragments enregistrés.

## Etape d'extraction des fragments de signaux (11)

Le signal enregistré par le dispositif d'enregistrement contient les fragments des trajectoires à reconnaître. Le module 21 d'extraction des fragments de signaux a pour objet d'extraire, des signaux enregistrés avec le dispositif d'enregistrement, l'ensemble des fragments contenus dans ces signaux. En sortie de ce module, sera fournie une liste de fragments et leurs caractéristiques.

Les méthodes d'extraction de fragments vont varier en fonction du type de signal traité et du type de fragment attendu. Par exemple, elles peuvent avoir recours à :

- des techniques de filtrage ;
- des techniques de segmentation ;
- des techniques de binarisation ;
- des techniques de recherche de centre de gravité par recherche de connexité ;

- des techniques d'analyse de formes à partir de moments d'inerties ;
- des techniques d'extraction d'objets paramétrés (segments, points, etc.) ;
- des techniques d'analyse d'histogramme de niveaux de gris ;
- des techniques de lissage ;
- des techniques d'ajustement des données par des fonctions paramétrées ;
- des techniques utilisant l'information de texture ;
- etc.

Les caractéristiques qui peuvent être assignées à chaque fragment sont, par exemple: la position, des paramètres de forme analytique (exemples : rayon d'un cercle, côté d'un carré), le niveau de gris moyen, la longueur, l'orientation, etc.

## Etape de génération de trajectoires potentielles (12)

Le module 22 de génération de trajectoires potentielles reçoit en entrée une liste de fragments et leurs caractéristiques respectives, ainsi que les caractéristiques du dispositif d'enregistrement et les caractéristiques du phénomène étudié. L'objet de ce module est de reconstituer, à partir de ces données, des trajectoires potentielles. Une trajectoire est définie comme une classe de fragments. En d'autres termes, une forme est constituée par un groupement de fragments satisfaisant les contraintes liées aux caractéristiques du dispositif d'enregistrement et aux caractéristiques du phénomène étudié.

Si une trajectoire est composé de $p$ fragments ($p$ est une caractéristique du dispositif d'enregistrement) et si $n$ fragments ($n > p$) ont été extraits des signaux par le module d'extraction de fragments, parmi les $C_n^p$ groupements de $p$ fragments, seul un nombre inconnu a priori $x$ de groupements remplit les contraintes liées aux caractéristiques du dispositif d'enregistrement et aux caractéristiques du phénomène étudié. Pour éviter l'énumération exhaustive des $C_n^p$ groupements, on peut contraindre la recherche dans l'ensemble des fragments par exemple par :

- recherche dans des voisinages donnés : on considère que seulement les fragments spatialement ou temporellement (en fonction de l'application) proches peuvent être groupés. Ainsi, considérant un fragment donné, on va considérer uniquement les fragments présents dans un certain voisinage centré sur lui. Parmi ces fragments, on retiendra ceux satisfaisant les contraintes ;
- extrapolation linéaire de déplacement, par exemple dans une application de vélocimétrie par imagerie particulaire, utilisant une séquence d'images : une extrapolation linéaire de déplacement pendant une étape est utilisée comme une approximation de chemin à l'étape suivante. Dans l'étape $i + 1$, les positions des particules sont scannées pour rechercher les particules non déjà assignées à l'intérieur d'un intervalle autour de la position extrapolée, à partir de la connaissance du déplacement déterminé entre l'étape $i - 1$ et l'étape $i$.

Les méthodes utilisées pour grouper les fragments en classes et les fusionner en trajectoires peuvent être, par exemple :

- des méthodes utilisant des stratégies de recherche arborescentes appelées "branch-and-bound". Afin de diminuer l'espace de recherche de toutes les combinaisons possibles de fragments, il est possible d'établir des heuristiques liées aux contraintes. Ces heuristiques vont permettre d'établir quelles sont les sortes de combinaisons qui ne peuvent être envisagées ;
- des méthodes utilisant des réseaux de neurones spécialisés pour les problèmes d'optimisation combinatoire. La fonction énergie que le réseau va être chargé de minimiser transcrit les contraintes et sera d'autant plus faible que les combinaisons retenues satisfont les contraintes liées au dispositif d'enregistrement et au phénomène étudié ;
- ou toute autre méthode permettant de sélectionner, parmi les $C_n^p$ combinaisons possibles, les $x$ groupements de fragments satisfaisant les contraintes.

Ainsi, à partir de la connaissance a priori sur les caractéristiques du phénomène étudié et sur le dispositif d'enregistrement, et d'autre part à partir de la liste de fragments extraits de signaux enregistrés, il va être possible de générer un ensemble de trajectoires potentielles.

Cependant, ces contraintes locales peuvent conduire à la génération de trajectoires satisfaisant les contraintes, mais erronées au sens du phénomène étudié. En d'autres termes, des classes de fragments peuvent ne pas être des trajectoires d'objets effectivement présents dans le phénomène étudié.

A notre connaissance, tous les procédés s'arrêtent à ce stade, quelles que soient les méthodes qu'ils utilisent et améliorent parfois leurs résultats par des techniques de lissage, moyennage et interpolation de valeurs. L'originalité du procédé décrit dans la présente invention réside en ce que :

- il réalise des modules complémentaires afin d'améliorer la qualité de l'interprétation proposée :

- module de mesure des compatibilités ou des incompatibilités et de la qualité d'un ensemble de trajectoires,
- module de recherche d'un ensemble de trajectoires mutuellement compatibles, dont l'interprétation a une qualité maximale ;
- ces modules discriminent les classes de fragments erronées par rapport à ceux correspondant à des trajectoires d'objets effectivement présents dans le phénomène étudié.

**Etape de détermination des contraintes et calcul des qualités entre paires de signaux (13, 14)**

La connaissance du phénomène étudié et du dispositif d'enregistrement de données fournit un certain nombre de données sur les trajectoires d'objets attendues. On en déduit :
- des contraintes strictes, dites de compatibilité ou d'incompatibilités (binaires, tout ou rien), que toute paire de trajectoires dans la solution doit satisfaire ;
- des critères permettant de quantifier la façon dont une paire de trajectoires potentielles contribue à la qualité de l'interprétation résultant de leur appartenance à la solution.

Les contraintes strictes sont des contraintes portant sur des paires de trajectoires et à valeurs binaires. Elles définissent des incompatibilités ou compatibilités pouvant exister entre trajectoires d'objets. Par exemple :
- dans un écoulement de mécanique des fluides, deux particules très voisines ne peuvent se déplacer dans un sens opposé. Donc les trajectoires correspondantes ne peuvent avoir des sens opposés ;
- en vélocimétrie par imagerie particulaire, on peut considérer que deux trajectoires constitués de $n$ points (où chaque point est la position de la particule considérée à un instant donné) ne peuvent avoir un point en commun ;
- dans une expérience de chambre à fils de détecteur électronique en physique des particules, une particule (et la trajectoire qui lui correspond) ne peut aller que dans un sens donné.

Ces contraintes seront représentées par des fonctions $f_k(i,j)$ fonction des caractéristiques des trajectoires $i$ et $j$.

La connaissance du phénomène étudié et du dispositif d'enregistrement fournit une connaissance sur les relations pouvant exister entre trajectoires. Ainsi, par exemple :
- en mécanique des fluides, en océanographie ou en météorologie, deux particules voisines doivent avoir des vitesses similaires. En mécanique des fluides notamment, cette propriété sera d'autant plus forte que la viscosité du fluide sera importante ;
- dans ces mêmes disciplines, on observe que des particules appartenant à des mêmes structures (partie laminaire d'un écoulement, tourbillon) ont un même centre de courbure ;
- en physique des particules, les signaux issus des détecteurs électroniques de particules fournissent l'indication que la courbe associée à la trajectoire d'une particule a une forme analytique souvent connue.

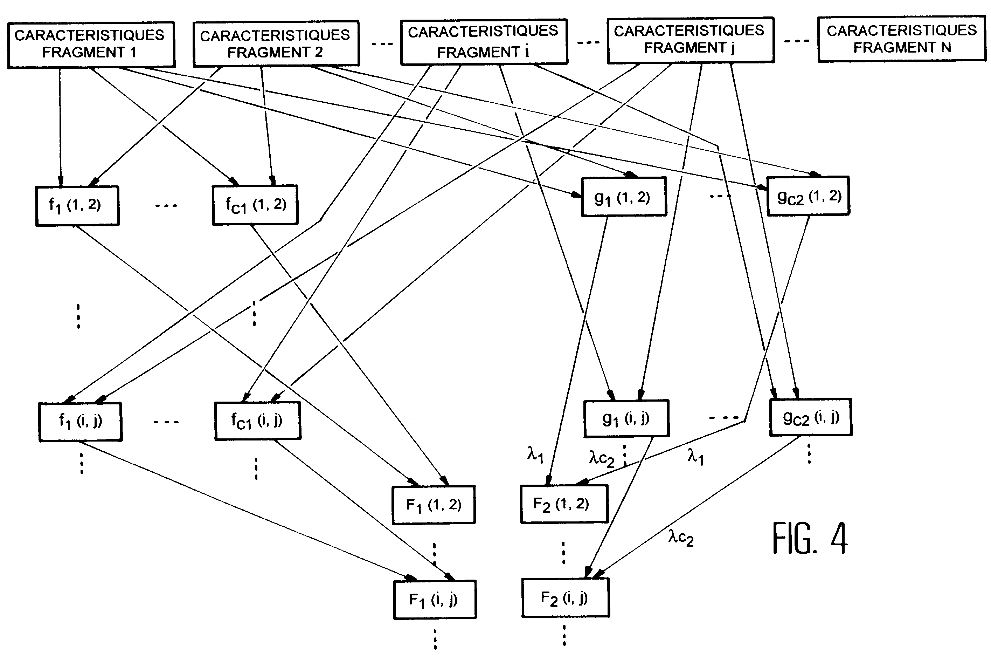

Dans une mise en application, on considère, au terme du module de génération de trajectoires potentielles, avoir généré $N$ trajectoires. La figure 4 visualise la mise en application du module de mesure des incompatibilités et de la qualité entre paires de signaux.

On définit une fonction de mesure de la satisfaction des contraintes $F_1(i,j)$ pour le n-uplet, par exemple la paire de trajectoires $(i,j)$. Cette fonction est à valeurs binaires indiquant soit la compatibilité ($F_1(i,j) = 0$) ou l'incompatibilité ($F_1(i,j) = 1$) entre les trajectoires $i$ et $j$. Elle est définie entre les trajectoires potentielles $i$ et $j$ voisines ; on note $V(i)$ un voisinage de $i$. Cette fonction s'écrit par exemple :

$$F_1(i,j) = \prod_{k=1}^{c_1} f_k(i,j) \qquad (4)$$

où $f_k(i,j)$ est la fonction de contraintes strictes associée à la contrainte $k$. Par exemple, les fonctions de contraintes strictes pourront être :

$$f_1(i,j) = \begin{cases} 0 & \text{si } i.j \geq 0 \\ 1 & \text{sinon} \end{cases} \qquad (5)$$

où $i$ et $j$ sont des vecteurs représentant respectivement les fragments $i$ et $j$.

Si $i$ et $j$ sont de sens opposé, alors la valeur retournée par $f_1(i,j)$ est 1 ; les fragments $i$ et $j$ sont incompatibles.

$$f_2(i,j) = \begin{cases} 1 \text{ si les fragments } i \text{ et } j \text{ partagent un point} \\ 0 \text{ sinon} \end{cases} \qquad (6)$$

Dans le cas d'application en vélocimétrie par imagerie particulaire, si les fragments $i$ et $j$ partagent un point, ils sont dits incompatibles.

Le coefficient de qualité entre plusieurs, par exemple deux, trajectoires $i$ et $j$ compatibles est mesuré par une fonction $F_2$. Elle retourne une valeur réelle, comprise entre 0 et 1 qui est d'autant plus élevée que la paire de trajectoires $(i,j)$ a une probabilité élevée d'appartenir à une solution d'interprétation de qualité maximale. En d'autres termes, $F_2(i,j)$ sera d'autant plus élevée que les trajectoires $(i,j)$ sont des trajectoires d'objets effectivement présents dans le phénomène étudié. Cette fonction est définie par :

$$F_2(i,j) = \sum_{k=1}^{c_2} \lambda_k \cdot g_k(i,j) \qquad (7)$$

où $g_k(i,j)$ est une fonction relative au critère $k$ et $F_2(i,j) \in [0,1]$. Ce terme tend a être d'autant plus élevé que les trajectoires $(i,j)$ sont cohérentes au sens du phénomène étudié. Les coefficients $\lambda_k$ sont des réels positifs et non nuls, qui pondèrent l'importance des critères entre eux. Par exemple, on peut avoir, pour expression des critères :

- dans le cas d'application en vélocimétrie par imagerie particulaire :

$$g_1(i,j) = 1 - \frac{\Gamma(\theta_i,\theta_j)}{\pi/2} \qquad (8)$$

où :

$\theta_i$ et $\theta_j$ sont les orientations des trajectoires potentielles $i$ et $j$,

$\Gamma(\theta_i,\theta_j)$ est l'angle intérieur formé par les trajectoires (segments de droite) $i$ et $j$.

Par cette expression, seront privilégiées les paires de trajectoires les plus alignées possible.

$$g_2(i,j) = e^{-\frac{d_{ij}^2}{2 \cdot \alpha}} \qquad (9)$$

où $d_{ij}$ est la distance entre les trajectoires $i$ et $j$ et $\alpha$ est un coefficient proportionnel à la variance mesurée sur les distances entre toutes les trajectoires extraites. Par cette fonction, seront privilégiés des objets proches l'un de l'autre ;

- dans le cas d'application en physique des particules :

$$g_3(i,j) = \frac{\cos^n \theta_{ij}}{r_{ij}} \qquad (10)$$

où $\theta_{ij}$ est l'angle entre les trajectoires $i$ et $j$, $r_{ij}$ est la longueur du vecteur somme des segments $i$ et $j$, et $n$ est un nombre entier. Par cette fonction, seront privilégiées les trajectoires constituées de segments courts et qui suivent des courbes lisses.

Si l'on désire manipuler des nombres binaires (afin de simplifier la résolution des problèmes dans les étapes suivantes), il convient de binariser, dans une étape supplémentaire, les mesures retournées par $F_2$.

Les fonctions $F_1(i,j)$ et $F_2(i,j)$ permettent respectivement de déterminer l'incompatibilité ou la compatibilité existant entre les trajectoires $i$ et $j$ et de mesurer la cohérence entre les trajectoires $i$ et $j$ par rapport au phénomène étudié.

Au stade de formalisation du problème sous forme de problème d'optimisation globale sous contraintes, on dispose d'une liste de trajectoires potentielles, de la liste des paires de trajectoires incompatibles entre elles (au sens du phénomène étudié et du dispositif d'enregistrement) et de la mesure de la qualité de chaque paire de trajectoires. L'interprétation retenue à l'issue du procédé ne doit inclure que des trajectoires d'objets effectivement présents dans le phénomène étudié. Or les contraintes définies précédemment ont permis d'établir une liste des paires de trajectoires potentielles, telle que chacune des trajectoire de la paire donnée ne peut être retenue dans la solution si l'autre trajectoire y est déjà retenue, i.e. la liste des trajectoires potentielles mutuellement incompatibles. D'autre part, elles ont permis de quantifier la qualité de chaque paire de trajectoires. Deux cas sont alors à considérer :

- cas où $F_2$ retourne des valeurs binaires. Dans ce cas, si pour deux trajectoires $i$ et $j$, $F_2(i,j) = 0$, alors on considère que les trajectoires $i$ et $j$ sont incompatibles. Le problème revient alors à rechercher le plus grand ensemble de trajectoires mutuellement compatibles, autrement dit le plus grand sous-graphe indépendant du graphe des incompatibilités dont les noeuds sont les trajectoires potentielles et les arêtes expriment les incompatibilités ;
- cas où $F_2$ retourne des valeurs réelles (par exemple entre 0 et 1). Considérant $x$ trajectoires parmi les $N$ trajectoires potentielles, on définit une fonction de qualité $F_q$ de l'interprétation des trajectoires sélectionnées utilisant les mesures de qualité pour chaque paire de trajectoires. $F_q$ est définie de telle sorte qu'elle a une valeur d'autant plus élevée que, parmi les trajectoires potentielles sélectionnées, beaucoup de trajectoires seront des trajectoires effectives.

Rechercher une solution ne contenant que des trajectoires effectivement présentes dans le phénomène étudié revient donc à chercher les trajectoires qui sont toutes compatibles entre elles et qui contribuent à maximiser la mesure de qualité $F_q$. C'est un problème d'optimisation globale sous contraintes. Par exemple, on peut choisir pour $F_q$ :

$$F_q = \sum_{i=1}^{N} \sum_{j=1}^{N} F_2(i,j) \cdot p_i \cdot p_j \qquad (11)$$

où $F_2(i,j)$ est la fonction de mesure de la qualité d'une paire de trajectoires $(i,j)$, et $p_i = 1$ si la trajectoire $i$ est sélectionnée comme faisant partie de la solution retenue. En résumé, le problème peut s'exprimer comme la recherche, parmi les $N$ trajectoires potentielles générées, du sous-ensemble de trajectoires maximisant la fonction de qualité $F_q$, fonction des $F_2(i,j)$, et satisfaisant les contraintes :

$$\forall (i,j) \in <1,N>^2, \ p_i = p_j = 1 \Rightarrow F_1(i,j) = F_1(j,i) = 0$$

**Etape de résolution du problème d'optimisation sous contraintes (15)**

Dans la cinquième étape, on résout le problème d'optimisation défini dans les étapes 13 et 14. Deux cas sont à considérer.

a) <u>Les coefficients de qualité $F_2(i,j)$ sont binaires.</u>

On utilise un premier réseau de neurones formels et apte à déterminer un sous-ensemble de trajectoires potentielles deux à deux non incompatibles de qualité maximum, où la qualité est mesurée comme le nombre de trajectoires potentielles dans le sous-ensemble trouvé. On a les étapes suivantes :

1) Construction d'un réseau de neurones récursif à partir des trajectoires potentielles et des relations entre les trajectoires potentielles en associant à chaque trajectoire potentielle la sortie binaire d'un neurone formel $p_i(t)$ :

$p_i(t) = 1 \Rightarrow$ la trajectoire potentielle appartient au sous-ensemble recherché.

$p_i(t) = 0 \Rightarrow$ la trajectoire potentielle n'appartient pas au sous-ensemble recherché.

2) Utilisation d'un procédé d'interruption afin d'obtenir des sous-ensembles de trajectoires potentielles deux à deux en relation tels que chaque chaque sous-ensemble trouvé ne peut pas être inclus dans un plus grand le contenant. On passe d'un sous-ensemble à un autre en essayant d'augmenter sa taille.

3) Initialisation de la sortie (par exemple à 0) et du potentiel de chaque neurone de telle sorte qu'ils vérifient, pour chaque neurone $i$ :

$p_i(t) = 1 \Leftrightarrow u_i(t = 0) \geqq 0$

$p_i(t) = 0 \Leftrightarrow u_i(t = 1) \leqq 0$

4) Exploitation dynamique récursive du réseau : on réalise une mise à jour asynchrone (par exemple aléatoire ou séquentielle) de l'ensemble des neurones du réseau dans un certain ordre, en balayant les neurones les uns après les autres en appliquant à leur potentiel une correction préalablement calculée, correction dépendant des valeurs des sorties des autres neurones et des relations existant entre les trajectoires potentielles. A chaque fois que le réseau a convergé, on obtient après décodage des sorties des neurones un sous-ensemble de trajectoires potentielles deux à deux non incompatibles (i.e. deux à deux compatibles) qui est mémorisé. Globalement, après décodage des sorties des neurones, on obtient une liste de sous-ensembles de trajectoires potentielles deux à deux non en relation, chacun de ces sous-ensembles ne pouvant être inclus dans un plus grand.
5) Choix parmi les sous-ensembles listés du plus grand par comparaison des tailles

Exploitation dynamique récursive de ce premier réseau de neurones.

On détermine la correction à appliquer au potentiel $u_i$ d'un neurone $i$ à une date $t$. Elle est donnée par une combinaison linéaire de deux termes :
- un terme a pour but d'inhiber le neurone i si celui-ci est activé et que la trajectoire potentielle associée est incompatible avec au moins une des trajectoires potentielles correspondant aux neurones activés à la date où il est considéré. Autrement dit, si la sortie $p_i$ du neurone $i$ à la date t vaut 1($p_i(t) = 1$), alors cette correction est donnée par :

$$p_i(t).T\left(\left\{p_j(t)\right\}\right)$$

où $T$ est une fonction des sorties $p_j(t)$ des neurones à la date $t$ qui correspondent à des trajectoires potentielles incompatibles avec la trajectoire potentielle associé au neurone $i$. Par exemple :

$$T\left(\left\{p_j(t)\right\}\right) = -1 + h\left(\sum_{j=1}^{N} e_{ij}.p_j(t)\right)$$

avec N le nombre de trajectoires potentielles
$e_{ij} = 1$ si les trajectoires potentielles $i$ et $j$ sont incompatibles
$e_{ij} = 0$ si les trajectoires potentielles $i$ et $j$ ne sont pas incompatibles (donc sont compatibles)
$h : R \rightarrow \{0,1\}$

$$x \rightarrow h(x) = 1 \quad si \ x = 0$$
$$= 0 \quad si \ x \neq 0$$

ou :

$$T\left(\left\{p_j(t)\right\}\right) = -\left[\sum_{j=1}^{N} e_{ij}.p_j(t)\right] / \deg(i)$$

où deg($i$) est le nombre de trajectoires potentielles avec lesquelles la trajectoire potentielle $i$ est incompatible ;
- un terme a pour but d'exciter le neurone si celui-ci est désactivé et que la trajectoire potentielle associée n'est pas incompatible avec toutes les trajectoires potentielles correspondant aux neurones activés à la date où il est considéré. Autrement dit, si la sortie $p_i$ du neurone $i$ considéré vaut 0 à la date $t(p_i(t)=0)$, alors cette correction est donnée par :

$$(1 - p_i(t)).S\left(\left\{p_j(t)\right\}\right)$$

où $S$ est une fonction des sorties $p_j(t)$ des autres neurones à la date $t$ qui correspondent à des trajectoires potentielles incompatibles avec la trajectoire potentielle associée au neurone $i$. Par exemple :

$$S\left(\left\{ p_j(t) \right\}\right) = h\left(\sum_{j=1}^{N} e_{ij}.p_j(t)\right)$$

$h : / R \rightarrow \{0,1\} / R$ étant l'ensemble des réels

$$x \rightarrow h(x) = 1 \quad si \ x = 0$$
$$= 0 \quad si \ x \neq 0$$

- ensuite, si le réseau a été mis à jour moins d'un certain nombre de fois préalablement fixé depuis la dernière convergence, alors on applique une excitation pour essayer d'augmenter, à la convergence suivante, la taille du sous-ensemble de trajectoires potentielles déterminé lors de la dernière convergence du réseau.

Autrement, un procédé d'interruption stoppe la prise en compte de cette excitation. Cette excitation peut s'écrire sous la forme :

$$\delta(\Delta u_1, ...., \Delta u_N, t).R\left(\left\{p_j(t)\right\}\right)$$

Par exemple :

$$\delta(\Delta u_1, ...., \Delta u_N, t).(1 - p_i(t)).l\left(N - \deg(i), \left\{p_j(t)\right\}\right)$$

où :

$\delta$ retourne 1 si le réseau de neurones a été mis à jour moins d'un certain nombre de fois fixé depuis la dernière convergence,

$l$ retoume 1 si $N$ - deg($i$) est supérieur à la plus grande taille des sous-ensembles de trajectoires potentielles trouvées jusqu'à la date $t$ ;

0 sinon.

Le réseau alterne donc des phases de pulsation (quand cette dernière excitation est prise en compte) et des phases de relaxation (quand le procédé d'interruption stoppe la prise en compte de l'excitation). Au cours de la phase de relaxation, le réseau converge. Une fois que le réseau a convergé, on applique à nouveau une excitation (phase de pulsation).

On alterne ainsi des phases de pulsation et de relaxation un certain nombre de fois, fixé par l'utilisateur (en fonction du temps qu'il a pour trouver une solution, de la qualité de la solution qu'il recherche). A l'issue de chaque phase de relaxation (à la convergence), les neurones dont la sortie vaut 1 codent un sous-ensemble de trajectoires potentielles deux à deux non incompatibles, c'est-à-dire deux à deux compatibles.

D'une façon générale, les équations de variation de potentiels peuvent s'écrire, pour tout $i$ appartenant à $\{1,N\}$ :

$$\Delta u_i(t) = A.p_i(t).T\left(\left\{p_j(t)\right\}\right) + B.(1 - p_i(t)).S\left(\left\{p_j(t)\right\}\right) + C.\delta(\Delta u_1, ..., \Delta u_N, t).R\left(\left\{p_j(t)\right\}\right)$$

où $A$, $B$ et $C$ sont des réels positifs. Avantageusement, on prend $A = B = C = 1$.

Avantageusement on borne le potentiel de chaque neurone entre deux valeurs fixées par l'utilisateur pour accélérer la convergence. Par exemple :

- on borne le potentiel entre des valeurs de l'ordre de grandeur des corrections à.appliquer au potentiel quand le neurone est mis à jour ;
- on borne les valeurs des potentiels entre $-10^{-\infty}$ et $10^{-\infty}$ : ainsi toute correction strictement négative à appliquer sur le potentiel d'un neurone activé le désactive, et toute correction strictement positive à appliquer sur le potentiel d'un neurone désactivé l'active.

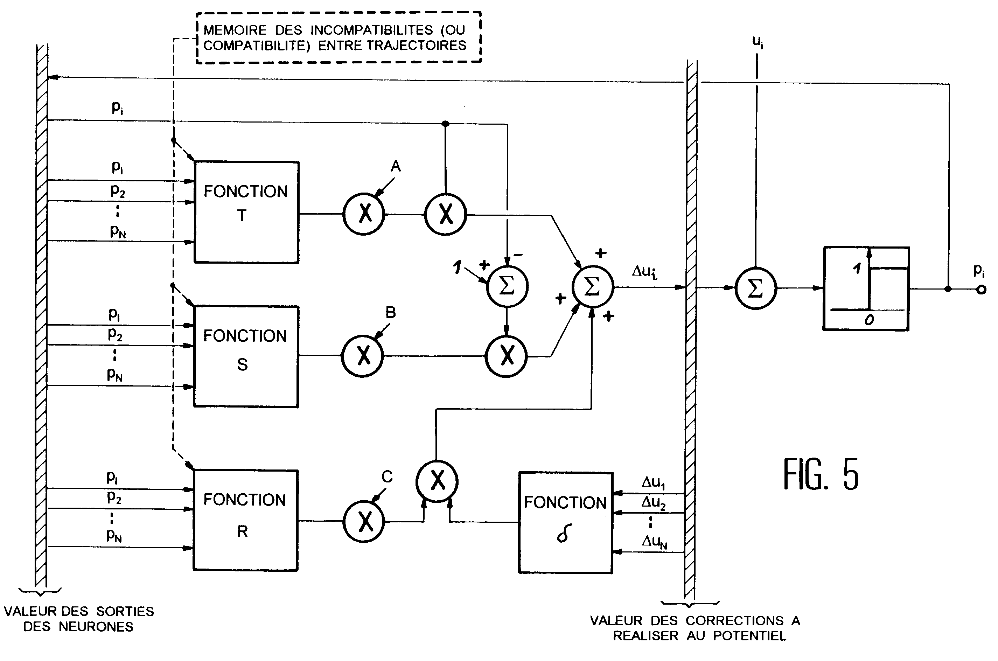

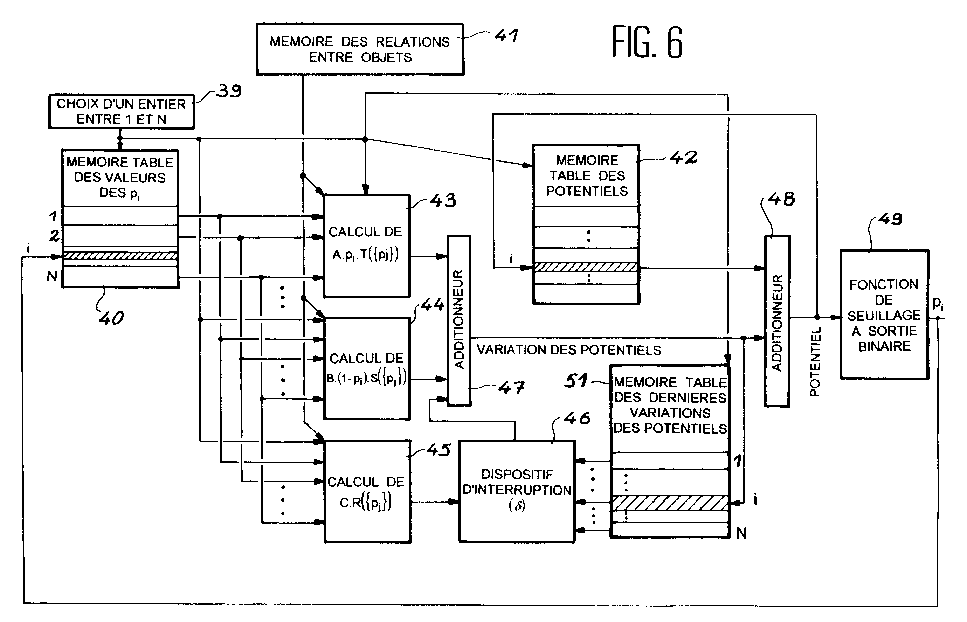

La figure 5 illustre un neurone $i$. La figure 6 donne un premier réseau de neurones associé au dispositif de mise en oeuvre du procédé de l'invention.

Ce premier réseau comprend :

- une première mémoire 40 table des valeurs des sorties $p_i$ des neurones recevant la sortie d'un circuit 39 de choix d'un entier allant de 1 à $N$ ;
- une seconde mémoire 41 des relations entre objets ;

- une troisième mémoire 42 table des potentiels des neurones ;
- une quatrième mémoire 51 table des dernières variations de potentiels des neurones ;
- un premier circuit de calcul 43 permettant de calculer

$$A.p_i.T\left(\left\{p_j\right\}\right) ;$$

- un second circuit de calcul 44 permettant de calculer

$$B\left(1 - p_i\right).S\left(\left\{p_j\right\}\right) ;$$

- un troisième circuit de calcul 45 permettant de calculer

$$C.R\left(\left\{p_j\right\}\right) ;$$

ces trois circuits de calculs étant reliés aux sorties des deux premières mémoires ;
- un dispositif d'interruption 46 relié à la sortie du troisième circuit de calcul et aux sorties de la quatrième mémoire ;
- un premier additionneur 47 recevant les sorties des deux premiers circuits de calcul et du dispositif d'interruption ;
- un second additionneur 48 recevant les sorties de la troisième mémoire et du premier additionneur ;
- un circuit de fonction de seuillage à sortie binaire 49 recevant la sortie du second additionneur.

Ce réseau comprend également une horloge 50 reliée à un générateur aléatoire 51 relié au circuit 39 de tirage d'un entier allant de 1 à $N$.

Le réseau de neurones évolue en mode asynchrone: un neurone est mis à jour à la fois.

On peut démontrer qu'un réseau de neurones ainsi défini converge (c'est-à-dire qu'il existe une date $t$ pour laquelle $\forall i$, $\forall t'>t, \Delta u_i(t') = 0$), en mode asynchrone à l'issue de chaque phase de relaxation et qu'à la convergence, toutes les contraintes strictes sont satisfaites.

b) <u>Les coefficients de qualité sont des réels</u>

On utilise un second réseau de neurones formels et apte à déterminer un sous-ensemble de trajectoires potentielles deux à deux non incompatibles de qualité maximum, où la qualité est mesurée par une fonction quelconque

$$E\left(\left\{p_i\right\}\right)$$

des sorties des neurones. On a les étapes suivantes :
1) Construction d'un réseau de neurones récursifs à partir des trajectoires potentielles et des relations entre les trajectoires potentielles en associant à chaque trajectoire potentielle la sortie binaire d'un neurone formel $p_i(t)$ :

$p_i(t) = 1 \Rightarrow$ la trajectoire potentielle appartient au sous-ensemble recherché,

$p_i(t) = 0 \Rightarrow$ la trajectoire potentielle n'appartient pas au sous-ensemble recherché.
2) Utilisation d'un procédé d'inhibition afin d'obtenir des sous-ensembles de trajectoires potentielles deux à deux non incompatibles. On passe d'un sous-ensemble à un autre en essayant d'augmenter la qualité de la solution.
3) Initialisation de la sortie et du potentiel associé à chaque neurone de telle sorte qu'ils vérifient, pour chaque neurone, les conditions suivantes :
- sur les sorties des neurones : si on initialise un neurone $i$ avec une sortie qui vaut 1 (neurone activé), alors les neurones $j$ correspondant à des trajectoires potentielles incompatibles avec la trajectoire potentielle $i$ ($e_{ij} = 1$) doivent être désactivés.

$$(p_i(t = 0) = 1) \Rightarrow (\forall j \in \{1,...,N\} \qquad e_{ij} = 1 \Rightarrow p_j(t = 0) = 0)$$

- **sur les potentiels** :

$p_i(t = 0) = 1 \Leftrightarrow u_i(t = 0) \geqq 0$

$p_i(t = 0) = 0 \Leftrightarrow u_i(t = 0) \leqq 0$

4) Exploitation dynamique récursive du réseau : on réalise une mise à jour de l'ensemble des neurones du réseau dans un certain ordre (par exemple aléatoire ou séquentiel) en considérant simultanément les neurones d'un bloc constitué d'un neurone $i$ (centre) et les neurones voisins associés aux trajectoires potentielles incompatibles avec la trajectoire potentielle $i$ (neurones $j$ pour lesquels $e_{ij} = 1$).

Pour mettre à jour ce bloc, on applique simultanément aux potentiels des neurones du bloc des corrections dépendantes des valeurs des sorties des autres neurones et des relations existant entre les trajectoires potentielles. L'expression mathématique de la correction à appliquer au potentiel d'un neurone diffère suivant qu'il est considéré comme centre d'un bloc ou comme voisin d'un centre d'un autre bloc.

Les corrections sont définies de telle sorte que dès qu'un neurone $i$ est activé, tous les neurones $j$ vérifiant $e_{ij} = 1$ sont désactivés au même instant.

L'exploitation dynamique génère des sous-ensembles de trajectoires potentielles deux à deux non incompatibles (donc deux à deux compatibles), chacun des sous-ensembles pouvant être associé à un maximum local de la fonction qualité.

A chaque fois que le réseau a convergé, on obtient après décodage des sorties des neurones, un sous-ensemble de trajectoires potentielles deux à deux non incompatibles (donc deux à deux compatibles) maximisant (localement) la fonction qualité. On mémorise chacun de ces sous-ensembles. Globalement on obtient une liste de sous-ensembles solutions

5) Choix parmi les sous-ensembles listés du meilleur par comparaison des qualités

## Exploitation dynamique récursive de ce second réseau de neurones

On met à jour le "bloc" de neurones ( $i$ et les neurones $j$ incompatibles avec i) correspondant de façon synchrone (tous les neurones du bloc sont mis à jour simultanément) en considérant le neurone $i$ comme "centre" du bloc et les neurones $j$ comme "voisins" du centre.

L'exploitation dynamique consiste donc à balayer l'ensemble des blocs de neurones dans un certain ordre (dynamique asynchrone) et à mettre à jour les neurones de chaque bloc de manière synchrone : on parle de dynamique synchrone par bloc ou bloc-synchrone.

## Détermination de la correction à appliquer au potentiel $u_i$ d'un neurone $i$ à une date $t$

Elle diffère suivant que le neurone dont on veut corriger le potentiel est considéré comme centre d'un bloc ou comme voisin d'un autre centre.

Quand on considère un bloc de neurones de centre $i$ et de voisins $V = \{j\}$ (pour tout $j$ dans $V$, $e_{ij} = 1$) à la date $t$, on regarde si le neurone $i$ est activé ou non :

- si le neurone $i$ est activé, on laisse le bloc inchangé ;
- si le neurone $i$ est désactivé, on exécute les étapes qui suivent :
  - on mémorise la valeur de la mesure de la qualité obtenue à la date

$$t - 1 : E\left(\left\{p_j(t-1)\right\}\right) \text{ ;}$$

  - on teste l'évolution suivante du réseau : on active le neurone $i$ et on désactive les neurones $j$ voisins si ceux-ci sont activés. On en déduit la variation de la mesure de la qualité correspondante

$$\Delta E\left(\left\{p_j(t-1)\right\}\right).$$

A) La correction à appliquer au potentiel du neurone $i$ est donnée par une combinaison linéaire de deux termes :

- un terme qui a pour but d'exciter le neurone $i$, s'il est désactivé avec une certaine probabilité en fonction de la valeur de

$$\Delta E\left(\left\{p_j(t-1)\right\}\right).$$

Par exemple l'excitation peut être donnée par :
  - max

$$\left(0, \Delta E\left(\left\{p_j(t-1)\right\}\right)\right),$$

  - 

$$\left(1 - p_i(t)\right) . \max\left(0, \Delta E\left(\left\{p_j(t-1)\right\}\right)\right),$$

17

- une procédure de Metropolis à une certaine température dans une méthode de recuit simulé,
- une procédure de Creutz à une certaine énergie dans une méthode de recuit microcanonique.

Si le réseau a été mis à jour moins d'un certain nombre de fois depuis la dernière convergence, alors on applique une inhibition pour essayer d'augmenter, à la convergence suivante, la qualité du sous-ensemble de trajectoires potentielles déterminé lors de la dernière convergence du réseau. Autrement un procédé d'interruption stoppe la prise en compte de cette inhibition.

Par exemple, cette inhibition peut consister à :

- inhiber un certain nombre de neurones, fixé par l'utilisateur, tirés aléatoirement,
- inhiber un nombre aléatoire de neurones tirés aléatoirement,
- inhiber des neurones parmi ceux qui correspondent à des trajectoires potentielles incompatibles avec beaucoup d'autres.

Globalement, le réseau alterne des phases de pulsation (quand cette dernière inhibition est prise en compte) et des phases de relaxation (quand le procédé d'interruption stoppe la prise en compte de l'inhibition). Au cours de la phase de relaxation, le réseau converge. Une fois que le réseau a convergé, on applique à nouveau une inhibition (phase de pulsation). On alterne ainsi des phases de pulsation et de relaxation un certain nombre de fois, fixé par l'utilisateur (en fonction du temps qu'il a pour trouver une solution, de la qualité de la solution qu'il recherche). A l'issue de chaque phase de relaxation, c'est-à-dire à chaque convergence, les neurones dont la sortie vaut 1 codent un sous-ensemble de trajectoires potentielles deux à deux non en relation.

B) La correction à appliquer au potentiel du neurone $j$ voisin de $i$ à la date $t$ est donnée par un terme qui a pour but d'inhiber le neurone $j$ d'une quantité égale à l'excitation reçue par le neurone $i$ à la même date. Par exemple, l'inhibition peut être donnée par :

- 

$$-e_{ij}.\max\left(0, \Delta E\left(\left\{p_j(t-1)\right\}\right)\right)$$

si l'excitation sur $i$ à $t$ vaut

$$\max\left(0, \Delta E\left(\left\{p_j(t-1)\right\}\right)\right)0$$

- 

$$-\left(1-p_i(t)\right).e_{ij}.\max\left(0, \Delta E\left(\left\{p_j(t-1)\right\}\right)\right)$$

si l'excitation sur $i$ à $t$ vaut

$$\left(1-p_i(t)\right).\max\left(0, \Delta E\left(\left\{p_j(t-1)\right\}\right)\right)$$

Avantageusement on borne le potentiel de chaque neurone entre deux valeurs fixées par l'utilisateur pour accélérer la convergence. Par exemple :

- on borne le potentiel entre des valeurs de l'ordre de grandeur des corrections à appliquer au potentiel quand le neurone est mis à jour ;
- on borne les valeurs des potentiels entre $-10^{-\infty}$ et $10^{-\infty}$ : ainsi toute correction strictement négative à appliquer sur le potentiel d'un neurone activé le désactive et toute correction strictement positive à appliquer sur le potentiel d'un neurone désactivé l'active.

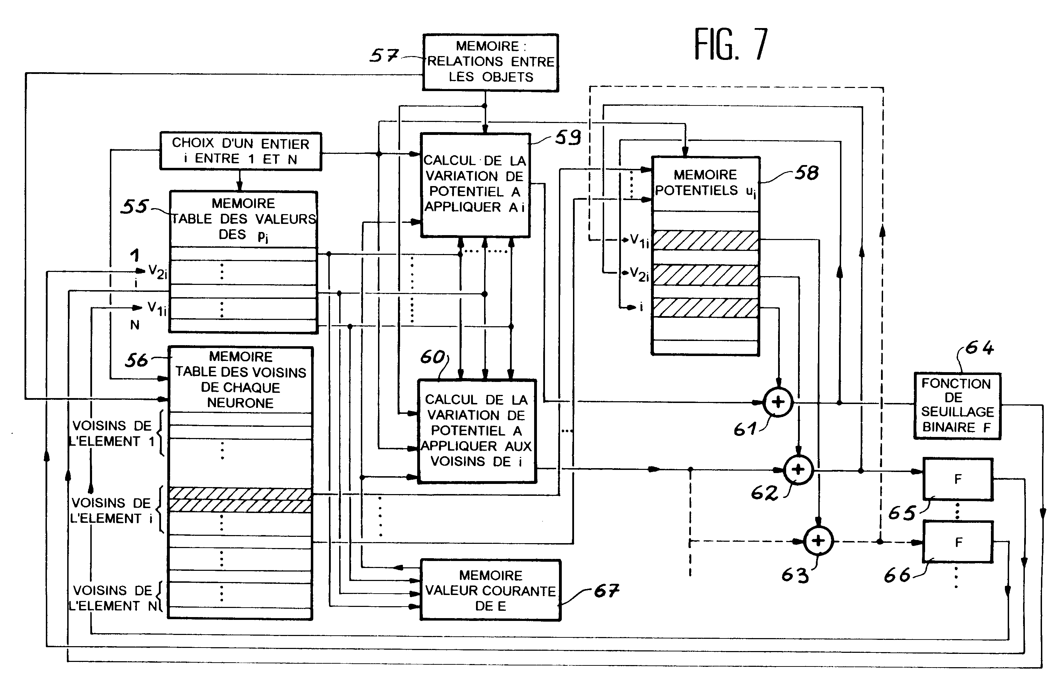

La figure 7 donne un dispositif associé au second réseau de neurones. Ce second réseau comprend :

- une première mémoire 55 table des valeurs des sorties $p_i$ des neurones ;
- une seconde mémoire 56 table des voisins de chaque neurone ;
- une troisième mémoire 57 des relations entre les objets ;
- une quatrième mémoire 58 des potentiels des neurones ;
- une cinquième mémoire 67 ;
- un premier circuit de calcul 59 permettant de calculer la variation de potentiel à appliquer au neurone $i$ ;
- un second circuit de calcul 60 permettant de calculer la variation de potentiel à appliquer aux neurones voisins du neurone $i$ ;
- un premier additionneur 61 recevant les sorties du premier circuit de calcul et de la quatrième mémoire ;

- au moins un second 62 additionneur recevant les sorties du second circuit de calcul et de la quatrième mémoire ;
- au moins deux circuits 64 et 65 fonctions de seuillage binaire *F* reliés respectivement aux sorties de ces deux additionneurs.

Dans le cas d'un dispositif numérique ces différents éléments sont connectés (directement ou indirectement) à une horloge.

Les algorithmes décrits précédemment ont été appliqués à de nombreuses images de mécanique des fluides. Une trajectoire, dans ces images, est composée de trois points consécutifs et alignés. L'ambiguïté sur la direction est levée par l'utilisation d'un codage particulier des pulsations : la durée entre les deux premières pulsations est égale au double de la durée entre les deux secondes pulsations.

On va à présent étudier un exemple de résultats des différents traitements réalisés dans le procédé de l'invention, en considérant successivement les deux cas analysés précédemment.

a) <u>Cas où les coefficients de qualité ($F_2(i,j)$) sont réels</u>

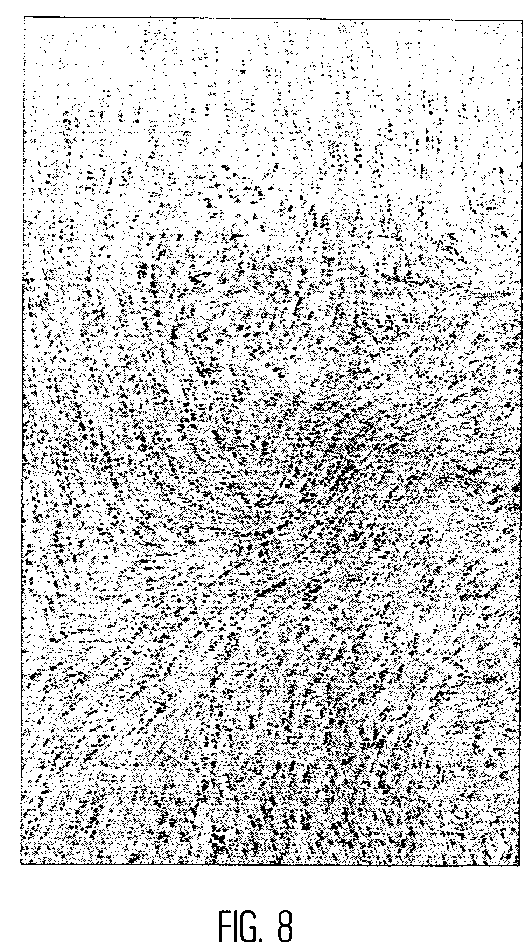

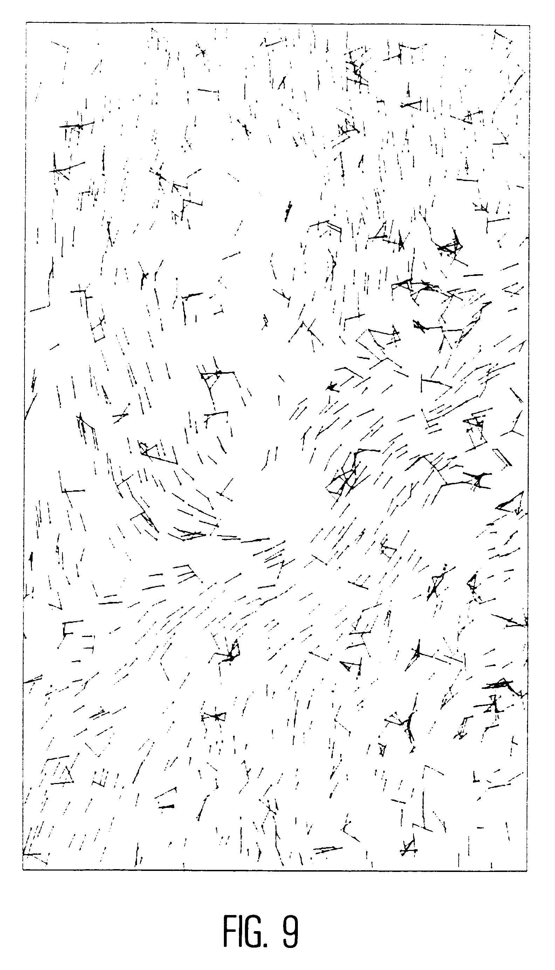

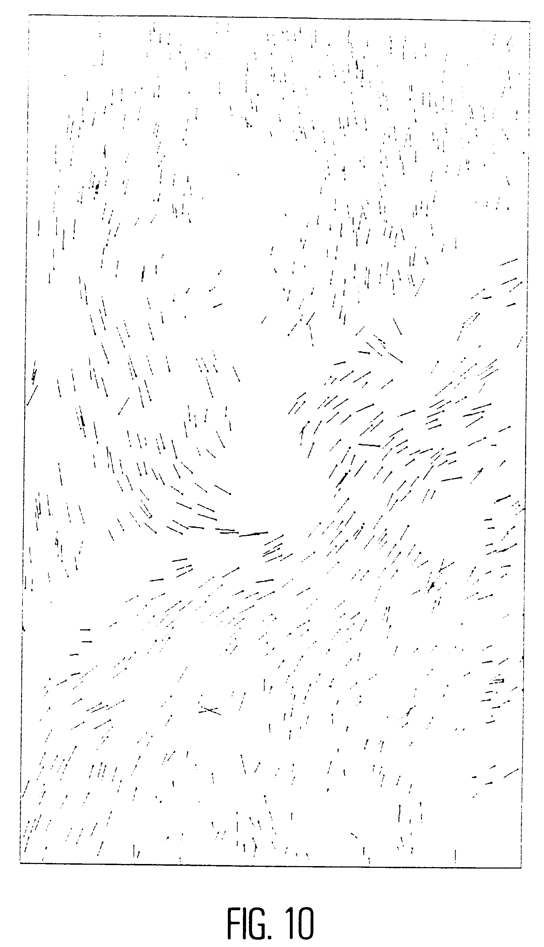

Les figures 8, 9 et 10 montrent les résultats des différents traitements réalisés. Ainsi, la figure 8 présente l'image originale. La dimension de cette image est de 1500∗1000 pixels. La figure 9 présente les trajectoires potentielles qui ont été générées au terme de l'étape 12. A partir de l'image originale 8, 6664 points ont été extraits et 1303 trajectoires potentielles (triplets de points) ont été générées. Le traitement (étapes 11 et 12) a nécessité 1030ms, sur une station de travail standard de type SUN SPARC 10. Le temps requis pour réaliser les étapes 13 et 14 (détermination des contraintes et calcul des qualités entre paires de signaux) a nécessité 2390ms. Enfin la dernière étape du traitement a requis 2880ms, soit un total pour le traitement total de l'image de 6290ms. La figure 10 représente le résultat final fourni par l'algorithme utilisant des coefficients de qualité réels. Sur cette image 775 trajectoires de particules ont été reconnues.

b) <u>Cas où les coefficients de qualité ($F_2(i,j)$) sont binaires</u>

L'image initiale et l'image des triplets potentiels générés sont les mêmes que précédemment, à savoir figures 8 et 9 respectivement. Le résultat du traitement par réseau neuromimétique fournit l'image 11. 510 trajectoires ont été extraites en 1mn 4680ms (temps requis pour les étapes 13, 14 et 15).

<u>LEXIQUE</u>

**Objet**

Un objet a une réalité physique. C'est par exemple une particule, une bulle d'air, une paillette, une étoile, ... Le procédé a pour but de déterminer automatiquement les trajectoires de divers objets au cours du temps.

**Fragment**

Un fragment est un enregistrement de la position dans l'espace d'un objet à une certaine date. Le procédé traite un ensemble de fragments.

**Classe de fragments**

Le procédé va segmenter l'ensemble des fragments en classes, chacune d'elle étant caractéristique d'un seul objet enregistré à divers instants. Une classe particulière correspond aux fragments que le procédé n'a pas associé à des objets. Tous les fragments de cette classe sont considérés comme du bruit, au sens du traitement du signal. Les classes doivent être deux à deux disjointes. Le nombre de fragments dans une classe caractéristique d'un objet est une entrée du procédé : c'est le nombre d'instants auxquels des enregistrements sont effectués.

**Trajectoire**

Une trajectoire est une classe de fragments associés à un objet.

### Neurone

Un neurone $i$ est défini par un potentiel $u_i$ et par une sortie binaire $p_i$. Quand, au cours de l'exploitation dynamique du réseau, le neurone est considéré à la date $t$, alors :

- on calcule une correction $\Delta u_i(t)$ à appliquer au potentiel $u_i(t + 1) = u_i(t) + \Delta u_i(t)$ ;
- on met à jour la sortie :
  - si $u_i(t + 1) > 0$ alors $p_i(t + 1) = 1$
  - si $u_i(t + 1) < 0$ alors $p_i(t + 1) = 0$

neurone activé       $p_i = 1$

neurone désactivé     $p_i = 0$

### Relation

Expression de la compatibilité de deux trajectoires potentielles dans une application de vélocimétrie, de deux paires ressource/demande dans une application d'affectation de ressources, et plus généralement une arête entre les noeuds d'un graphe, ...

On a un ensemble de trajectoires potentielles dont on cherche à extraire un sous-ensemble vérifiant une certaine propriété basée sur des relations entre les trajectoires potentielles. Considérés deux par deux, il existe ou non une relation (issue d'une application) entre les trajectoires potentielles.

Si une trajectoire potentielle $i$ est en relation avec une trajectoire potentielle $j$, alors $e_{ij} = 1$. Sinon $e_{ij} = 0$. $(e_{ij})$ est la matrice des relations entre les trajectoires potentielles.

### Revendications

1. Procédé d'obtention de trajectoires d'objets en mouvement, en optimisant au moins un critère issu de la physique du phénomène observé, caractérisé en ce qu'il comprend les étapes suivantes :
   - une étape (10) d'enregistrement de signaux composés de fragments caractéristiques des positions des objets à différents instants, de parties qui présentent la même nature que les fragments mais qui sont du bruit et de parties attribuables au bruit sans confusion possible ;
   - une étape (11) d'extraction de parties de signaux ayant la même nature que les fragments et détermination de caractéristiques leur étant associées, à partir des connaissances a priori sur leur nature et sur les trajectoires recherchées ;
   - une étape (12) de répartition de l'ensemble des parties de signaux précédemment extraits en classes, chaque classe représentant une trajectoire potentielle et comprenant un nombre prédéterminé de fragments ;
   - une étape (13, 14) de sélection d'un sous-ensemble de classes qui satisfait des contraintes liées au type de réseau observé, comportant :
     - la génération d'un ensemble de n-uplets constitués d'un sous-ensemble de n classes,
     - la mesure de la compatibilité des classes assemblées en n-uplets par une première fonction analytique ($F1$), déterminée à partir des contraintes liées au type de phénomène observé et au dispositif d'acquisition,
     - la mesure de la qualité des n-uplets par une seconde fonction analytique ($F2$), déterminée à partir des contraintes liées au phénomène observé et au dispositif d'acquisition ;
   - une étape (15) de sélection parmi les classes représentant les trajectoires potentielles de celles satisfaisant les contraintes, par un procédé d'optimisation sous contraintes du (ou des) critère(s) précédent(s), en utilisant les mesures précédentes de compatibilité et de qualité, de façon à obtenir les trajectoires "réelles" des objets.

2. Procédé selon la revendication 1, caractérisé en ce que dans la première étape la position des objets est enregistrée à plusieurs instants distincts et consécutifs, séparés par des intervalles de temps fixés.

3. Procédé selon la revendication 1, caractérisé en ce que pendant l'étape d'enregistrement, lorsqu'il est impossible de travailler en temps réel, le traitement de conditionnement des signaux obtenus comporte une sous-étape de mémorisation des signaux.

4. Procédé selon la revendication 3, caractérisé en ce que les signaux sont prétraités avant leur mémorisation.

5. Procédé selon la revendication 1, caractérisé en ce que les n-uplets sont des paires.

6. Procédé selon la revendication 1, caractérisé en ce que la dernière étape de sélection de sous-ensembles de formes mutuellement compatibles est réalisée en utilisant un réseau de neurones.

7. Procédé selon l'une quelconque des revendications précédentes, caractérisé en ce qu'il peut être utilisé pour l'extraction de formes déterminées dans un environnement bruité.

8. Procédé selon l'une quelconque des revendications précédentes, caractérisé en ce que les objets sont des particules.

9. Dispositif de mise en oeuvre du procédé selon l'une quelconque des revendications précédentes, caractérisé en ce qu'il comprend :
   - un dispositif d'enregistrement (20) ;
   - un module d'extraction de caractéristiques (21) ;
   - un module de génération de trajectoires potentielles (22) ;
   - un module de mise en forme du problème (23) ;
   - un module de résolution du problème d'optimisation (24).

10. Dispositif selon la revendication 9, caractérisé en ce que le dispositif d'enregistrement (20) comprend :
    - un étage d'échantillonnage de signaux (31) ;
    - un étage d'acquisition (30) ;
    - un étage d'enregistrement (31).

11. Dispositif selon la revendication 9, caractérisé en ce que le module de résolution du problème d'optimisation (24) comprend un réseau de neurones.

12. Dispositif selon la revendication 11, caractérisé en ce que ce réseau de neurone comprend :
    - une première mémoire (40) table des sorties $p_i$ des neurones recevant la sortie d'un circuit de choix d'un entier allant de 1 à $N$ ;
    - une seconde mémoire (41) des relations entre objets ;
    - une troisième mémoire (42) table des potentiels des neurones ;
    - une quatrième mémoire (51) table des dernières variations des potentiels des neurones ;
    - un premier circuit de calcul (43) permettant de calculer

$$A.p_i.T\left(\left\{p_j\right\}\right) ;$$

    - un second circuit de calcul (44) permettant de calculer

$$B.(1-p_i).S\left(\left\{p_j\right\}\right) ;$$

    - un troisième circuit de calcul (45) permettant de calculer

$$C.R.\left(\left\{p_j\right\}\right) ;$$

    ces trois circuit de calculs étant reliés aux sorties des deux premières mémoires ;
    - un dispositif d'interruption (46) relié à la sortie du troisième circuit de calcul et aux sorties de la quatrième mémoire ;
    - un premier additionneur (47) recevant les sorties des deux premiers circuits de calcul et du dispositif d'interruption ;
    - un second additionneur (48) recevant les sorties de la troisième mémoire et du premier additionneur ;
    - un circuit de fonction de seuillage à sortie binaire (49) recevant la sortie du second additionneur.

13. Dispositif selon la revendication 11, caractérisé en ce que ce réseau de neurones comprend :
    - un circuit de choix d'un entier entre 1 et $N$
    - une première mémoire (55) table des valeurs des sorties $p_i$ des neurones ;
    - une seconde mémoire (56) liste des voisins de chaque neurone ;
    - une troisième mémoire (57) relation entre les objets ;

- une quatrième mémoire (58) des potentiels des neurones ;
- une cinquième mémoire (67) contenant la valeur courante de la mesure E à optimiser ;
- un premier circuit de calcul (59) permettant de calculer la variation de potentiel à appliquer au neurone ;
- un second circuit de calcul (60) permettant de calculer la variation de potentiel à appliquer aux neurones voisins du neurone $i$ ;
- un premier additionneur (61) recevant les sorties du premier circuit de calcul et de la quatrième mémoire ;
- au moins un second additionneur (62, 63) recevant les sorties du second circuit de calcul et de la quatrième mémoire ;
- au moins deux circuits fonctions de seuillage binaire $F$ (64 et 65) reliés respectivement aux sorties de ces deux additionneurs.

FIG. 1

FIG. 2

FIG. 3

FIG. 4

FIG. 5

MEMOIRE DES INCOMPATIBILITES (OU COMPATIBILITE) ENTRE TRAJECTOIRES

FONCTION T

FONCTION S

FONCTION R

FONCTION $\delta$

$p_i$

$p_1$
$p_2$
$p_N$

$\Delta u_i$

$u_i$

$\Delta u_1$
$\Delta u_2$
$\Delta u_N$

$p_i$

VALEUR DES SORTIES DES NEURONES

VALEUR DES CORRECTIONS A REALISER AU POTENTIEL

EP 0 681 270 A1

FIG. 6

FIG. 7

EP 0 681 270 A1

FIG. 8

FIG. 9

FIG. 10

FIG. 11

**Office européen des brevets**

# RAPPORT DE RECHERCHE EUROPEENNE

Numero de la demande

**EP 95 40 0957**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 210 798 (LEON K. EKCHIAN ET AL.) <br> * abrégé * <br> * colonne 9, ligne 18 - colonne 10 * <br> --- | 1-11 | G06T7/20 |
| A | BIOLOGICAL CYBERNETICS, <br> vol. 69, no. 5/6, 1993 HEIDELBERG DE, <br> pages 517-524, XP 000397962 <br> A.V. LUKASHIN ET AL. 'A dynamical neural network model for motor cortical activity during movement: population coding of movement trajectories' <br> * page 521, colonne de droite, alinéa 4.3 - page 522, colonne de droite, alinéa 4.4 * <br> --- | 1-11 | |
| A | PROCEEDINGS OF THE 1992 IEEE COMPUTER SOCIETY CONFERENCE ON COMPUTER VISION AMD PATTERN RECOGNITION, CAMPAIGN (US) ,JUNE 15-18,1992 ;IEEE COMPUTER SOCIETY PRESS, LOS ALAMITOS (US), <br> pages 839-841, XP 000357448 <br> MUBARAK SHAH ET AL. 'Motion Trajectories' <br> * le document en entier * <br> --- | 1-11 | |
| A | PROCEEDINGS OF THE IEEE INTERNATIONAL CONFERENCE ON SYSTEMS,MAN ,AND CYBERNETICS ,OCTOBER 13-16,1991 ,CHARLOTTESVILLE (US); IEEE PRESS (NEW YORK), <br> pages 1523-1528, XP 000237871 <br> KWANG KIM ET AL. 'Neural target tracking' <br> * le document en entier * <br> * figures 3,5 * <br> ----- | 1-11 | **DOMAINES TECHNIQUES RECHERCHES (Int.Cl.6)** <br> G06T <br> G01S |

Le présent rapport a été établi pour toutes les revendications

| Lieu de la recherche | Date d'achèvement de la recherche | Examinateur |
|---|---|---|
| LA HAYE | 12 Juillet 1995 | Chateau, J-P |